# EUROPEAN PATENT SPECIFICATION

(11) **EP 0 664 039 B1**
(45) Date of publication and mention of the grant of the patent: **15.10.1997**
(21) Application number: 94906003.2
(22) Date of filing: 03.01.1994
(51) Int. Cl.: G06T 11/00

(54) **OBJECT-ORIENTED ELEMENT SHADING AND COLORING**
OBJEKT-ORIENTIERTES ELEMENT-SCHATTIEREN UND EINFÄRBEN
OMBRAGE ET COLORATION D'ELEMENTS ORIENTES OBJET

(30) Priority: 18.08.1993 US 108876
(43) Date of publication of application: 26.07.1995
(73) Proprietor: TALIGENT, INC., Cupertino, CA 95014 (US)
(72) Inventor: MATHENY, John, R., Mountain View, CA 94043 (US); WHITE, Christopher, Mountain View, CA 94041 (US); SIBERLING, Robin, A., Palo Alto, CA 94301 (US)
(74) Representative: Kindermann, Manfred
(86) International application number: US9400056
(87) International publication number: WO9505638

(56) References cited:
- EP-A- 0 406 084
- FR-A- 2 588 398
- GB-A- 2 261 144

## Description

### COPYRIGHT NOTIFICATION

Portions of this patent application contain materials that are subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

### Field of the Invention

The invention relates to a method and a system for processing graphic objects on a computer with a memory and an attached display with the aid of an object-oriented operating system.

### Background of the Invention

It is a recent trend in computer software to present the visual components of the software (such as controls and windows) using a visual style with a three-dimensional (3D) effect that gives the illusion of tactile and spatial qualities. This trend has been assisted by recent advances in CRT hardware display capabilities. A 3D appearance conveys important cues about the software interface and complements direct manipulation methods of interacting with software. For example, NeXT computers uses 3D shading to enhance the appearance of buttons on their operating system. Computer Aided Design (CAD) packages have also employed 3D shading to enhance the appearance of design information.

A known system for the processing of images comprises a microprocessor, a bitprocessor, a number of storages for storing programs and image data, and a display screen which units operate under the control of a system control program (FR A - 2 588 398). This system is capable of processing white drawings on a black background and representing hachures or shadow areas to create a three-dimensional appearance. The known system also comprises means to fill and coloring internal areas between contour lines and to combine various types of representation. This system operates under the control of procedural programs and is not equipped for the processing of a pluralities of colors.

### Summary of the Invention

The invention is defined in claims 1 and 14. Further claims relate to important improvements of the invention.

An innovative system and method apply appropriate colors to geometric figures and create an effect of lightly contoured surface areas used for drawing human interface elements on a CRT display. A processor with an attached storage and display process graphic objects with the aid of an object-oriented operating system by receiving a plurality of colors defining an object and calculating a shadow color based on the plurality of colors. Then a highlight color is calculated based on the plurality of colors, and finally the object is displayed on the display with a shadow color and a highlight color giving the object a three dimensional appearance.

### Brief Description of the Drawings

Figure 1 is a block diagram of a personal computer system in accordance with a preferred embodiment;
Figure 2 illustrates a button in accordance with a preferred embodiment;
Figure 3 illustrates some example areas which can be created by applying hilight and shading colors to geometric shapes in accordance with a preferred embodiment;
Figure 4 shows a range of ten percent black tints, which create a range of grays in accordance with a preferred embodiment;
Figure 5 show an example of a button with each of the shade areas in accordance with a preferred embodiment;
Figures 6A and 6B illustrate graphic objects, which differ only in the colors used for the frame and shadow areas, and the resulting optical effect of different levels of depth in accordance with a preferred embodiment;
Figure 7 illustrates an HSV color space, based on a cylindrical coordinate system in accordance with a preferred embodiment;
Figure 8 illustrates outside edges of a RGB cube in accordance with a preferred embodiment;
Figure 9 is a flowchart presenting the logic associated with a preferred embodiment; and
Figure 10 is a flowchart of the detailed logic associated with obtaining new values for the Highlight Color, Shadow Color, Frame Color and the Light Shadow Color in accordance with a preferred embodiment.

### Detailed Description Of The Invention

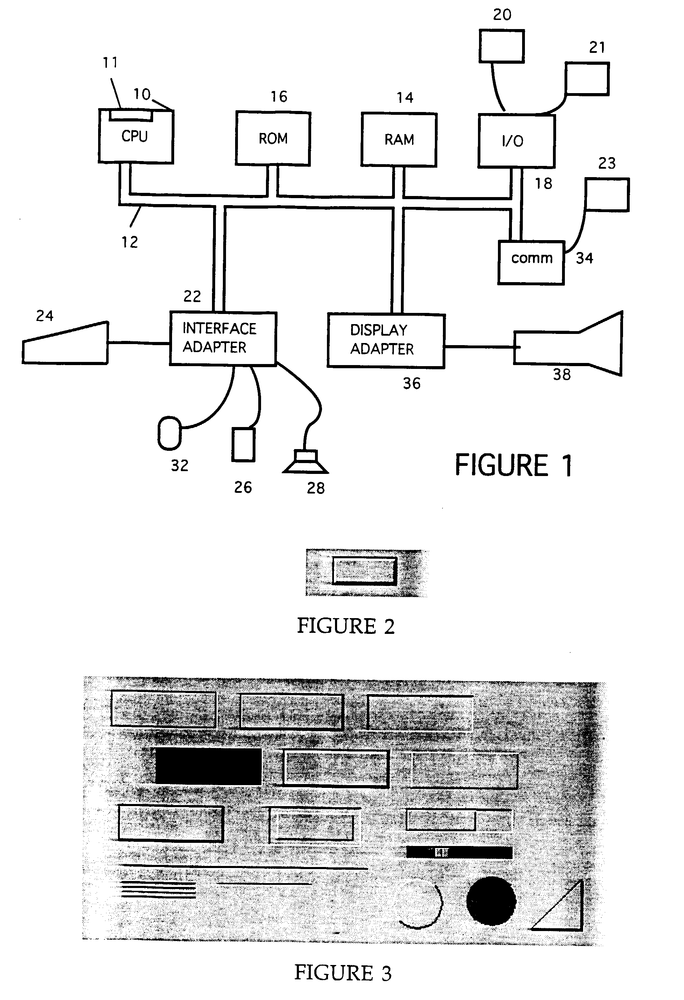

The invention is preferably practiced in the context of an operating system resident on a personal computer such as the IBM ® PS/2 ® or Apple ® Macintosh ® computer. A representative hardware environment is depicted in Figure 1, which illustrates a typical hardware configuration of a computer in accordance with the subject invention having a central processing unit 10, such as a conventional microprocessor, with a built in non-volatile storage 11, and a number of other units interconnected via a system bus 12. The workstation shown in Figure 1 includes a Random Access Memory (RAM) 14, Read Only Memory (ROM) 16, an I/O adapter 18 for connecting peripheral devices such as a disk unit 20, and a diskette unit 21 to the bus, a user interface adapter 22 for connecting a keyboard 24, a mouse 26, a speaker 28, a microphone 32, and/or other user interface devices such as a touch screen device (not shown) to the bus, a communication adapter 34 for connecting the workstation to a data processing network 23 and a display adapter 36 for connecting the bus to a display device 38. The computer has resident thereon an operating system such as the Apple System/7 ® operating system.

### Object Oriented Programming Techniques

In a preferred embodiment, the invention is implemented in the C++ programming language using object oriented programming techniques. As will be understood by those skilled in the art, Object-Oriented Programming (OOP) objects are software entities comprising data structures and operations on the data. Together, these elements enable objects to model virtually any real-world entity in terms of its characteristics, represented by its data elements, and its behavior, represented by its data manipulation functions. In this way, objects can model concrete things like people and computers, and they can model abstract concepts like numbers or geometrical concepts. The benefits of object technology arise out of three basic principles: encapsulation, polymorphism and inheritance.

Objects hide, or encapsulate, the internal structure of their data and the algorithms by which their functions work. Instead of exposing these implementation details, objects present interfaces that represent their abstractions cleanly with no extraneous information. Polymorphism takes encapsulation a step further. The idea is many shapes, one interface. A software component can make a request of another component without knowing exactly what that component is. The component that receives the request interprets it and determines, according to its variables and data, how to execute the request. The third principle is inheritance, which allows developers to reuse pre-existing design and code. This capability allows developers to avoid creating software from scratch. Rather, through inheritance, developers derive subclasses that inherit behaviors, which the developer then customizes to meet their particular needs.

A prior art approach is to layer objects and class libraries in a procedural environment. Many application frameworks on the market take this design approach. In this design, there are one or more object layers on top of a monolithic operating system. While this approach utilizes all the principles of encapsulation, polymorphism, and inheritance in the object layer, and is a substantial improvement over procedural programming techniques, there are limitations to this approach. These difficulties arise because it is easy for a developer to reuse their own objects, it is difficult to use objects from other systems, and a developer still needs to reach into the internal, non-object layers with procedural Operating System (OS) calls.

Another aspect of object oriented programming is a framework approach to application development. One of the most rational definitions of frameworks come from Ralph E. Johnson of the University of Illinois and Vincent F. Russo of Purdue. In their 1991 paper, *Reusing Object-Oriented Designs,* University of Illinois tech report UIUCDCS91-1696 they offer the following definition: "An abstract class is a design of a set of objects that collaborate to carry out a set of responsibilities. Thus, a framework is a set of object classes that collaborate to execute defined sets of computing responsibilities." From a programming standpoint, frameworks are essentially groups of interconnected object classes that provide a pre-fabricated structure of a working application. For example, a user interface framework might provide the support and "default" behavior of drawing windows, scroll bars, menus, etc. Since frameworks are based on object technology, this behavior can be inherited and overridden to allow developers to extend the framework and create customized solutions in a particular area of expertise. This is a major advantage over traditional programming since the programmer is not changing the original code, but rather extending the software. In addition, developers are not blindly working through layers of code because the framework provides architectural guidance and modeling but at the same time frees them to then supply the specific actions unique to the problem domain.

From a business perspective, frameworks can be viewed as a way to encapsulate or embody expertise in a particular knowledge area. Corporate development organizations, Independent Software Vendors (ISV)s and system integrators have acquired expertise in particular areas, such as manufacturing, accounting, or currency transactions. This expertise is embodied in their code. Frameworks allow organizations to capture and package the common characteristics of that expertise by embodying it in the organization's code. First, this allows developers to create or extend an application that utilizes the expertise, thus the problem gets solved once and the business rules and design are enforced and used consistently. Also, frameworks and the embodied expertise behind the frameworks have a strategic asset implication for those organizations which have acquired expertise in vertical markets such as manufacturing, accounting, or bio-technology have a distribution mechanism for packaging, reselling, and deploying their expertise, and furthering the progress and dissemination of technology.

Historically, frameworks have only recently emerged as a mainstream concept on computing platforms. This migration has been assisted by the availability of object-oriented languages, such as C++. Traditionally, C++ was found mostly on UNIX systems and researcher's workstations, rather than on computers in commercial settings. It is languages such as C++ and other object-oriented languages, such as Smalltalk and others, that enabled a number of university and research projects to produce the precursors to today's commercial frameworks and class libraries. Some examples of these are InterViews from Stanford University, the Andrew toolkit from Carnegie-Mellon University and University of Zurich's ET++ framework.

There are many kinds of frameworks depending on the level of the system and the nature of the problem. The types of frameworks range from application frameworks that assist in developing the user interface, to lower level frameworks that provide basic system software services such as communication, printing, file systems support, graphic, etc. Commercial examples of application frameworks are MacApp (Apple), Bedrock (Symantec), OWL (Borland), NeXTStep App Kit (NeXT), and Smalltalk-80 MVC (ParcPlace).

Programming with frameworks requires a new way of thinking for developers accustomed to other kinds of systems. In fact, it is not like "programming" at all in the traditional sense. In old-style operating systems such as DOS or UNIX, the developer's own program provides all of the structure. The operating system provides services through system calls-the developer's program makes the calls when it needs the service and control returns when the service has been provided. The program structure is based on the flow-of-control, which is embodied in the code the developer writes.

When frameworks are used, this is reversed. The developer is no longer responsible for the flow-of-control. The developer must forego the tendency to understand programming tasks in term of flow of execution. Rather, the thinking must be in terms of the responsibilities of the objects, which must rely on the framework to determine when the tasks should execute. Routines written by the developer are activated by code the developer did not write and that the developer never even sees. This flip-flop in control flow can be a significant psychological barrier for developers experienced only in procedural programming. Once this is understood, however, framework programming requires much less work than other types of programming.

In the same way that an application framework provides the developer with prefab functionality, system frameworks, such as those included in a preferred embodiment, leverage the same concept by providing system level services, which developers, such as system programmers, use to subclass/override to create customized solutions. For example, consider a multi-media framework which could provide the foundation for supporting new and diverse devices such as audio, video, MIDI, animation, etc. The developer that needed to support a new kind of device would have to write a device driver. To do this with a framework, the developer only needs to supply the characteristics and behavior that is specific to that new device.

The developer in this case supplies an implementation for certain member functions that will be called by the multi-media framework. An immediate benefit to the developer is that the generic code needed for each category of device is already provided by the multi-media framework. This means less code for the device driver developer to write, test, and debug. Another example of using system framework would be to have separate I/O frameworks for SCSI devices, NuBus cards, and graphics devices. Because there is inherited functionality, each framework provides support for common functionality found in its device category. Other developers could then depend on these consistent interfaces to all kinds of devices.

A preferred embodiment takes the concept of frameworks and applies it throughout the entire system. For the commercial or corporate developer, system integrator, or OEM, this means all the advantages that have been illustrated for a framework such as MacApp can be leveraged not only at the application level for such things as text and user interfaces, but also at the system level, for services such as graphics, multi-media, file systems, I/O, testing, etc.

Application creation in the architecture of a preferred embodiment is essentially like writing domain-specific puzzle pieces that adhere to the framework protocol. In this manner, the whole concept of programming changes. Instead of writing line after line of code that calls multiple API hierarchies, software will be developed by deriving classes from preexisting frameworks within this environment, and then adding new behavior and/or overriding inherited behavior as desired.

Thus, the developer's application becomes the collection of code that is written and shared with all the other framework applications. This is a powerful concept because developers will be able to build on each other's work. This also provides the developer the flexibility to customize as much or as little as needed. Some frameworks will be used just as they are. In some cases, the amount of customization will be minimal, so the puzzle piece the developer plugs in will be small. In other cases, the developer may make very extensive modifications and create something completely new. In a preferred embodiment, as shown in Figure 1, a program resident in the RAM 14, and under the control of the CPU 10, is responsible for managing various tasks using an object oriented graphic framework.

A preferred embodiment employs a new architecture to automatically create the appearance of contoured surface areas, which are employed in the architecture to draw the human interface elements of the software. Representing parts of a computer interface as surfaces or objects that have depth imparts a tangible, real-world quality which conveys meaning and functionality. For example, a user will be able to recognize and use a button control on the screen, because it resembles the user's concept of push buttons in the real world. Figure 2 shows an example of a button represented in this manner. This tangible appearance enables users to take advantage of what they know about the real world and tacitly apply that knowledge to using a computer interface. This is one factor in creating computer software that is "easy to use".

### Creating the appearance of contoured elements

The appearance of contoured elements relies on changes in color intensity which serve as visual cues that convey depth, shape and contour. This is the case in all types of flat visual mediums including paper, canvas and computer screens. For the purposes of a computer application, the elements showing contour generally need to be simply drawn with little detail and flat depth. To represent elements on the display, the colors of geometric figures are carefully chosen to give the illusion of light striking an irregular surface, creating highlighted edges, shaded areas, and shadows. It is not necessary to define these elements as actual 3D objects, for their only function is to give the effect of depth and contour, and to be derived and rendered as quickly as possible on the screen. Figure 3 shows some example areas which can be created by applying hilight and shading colors to simple geometric shapes.

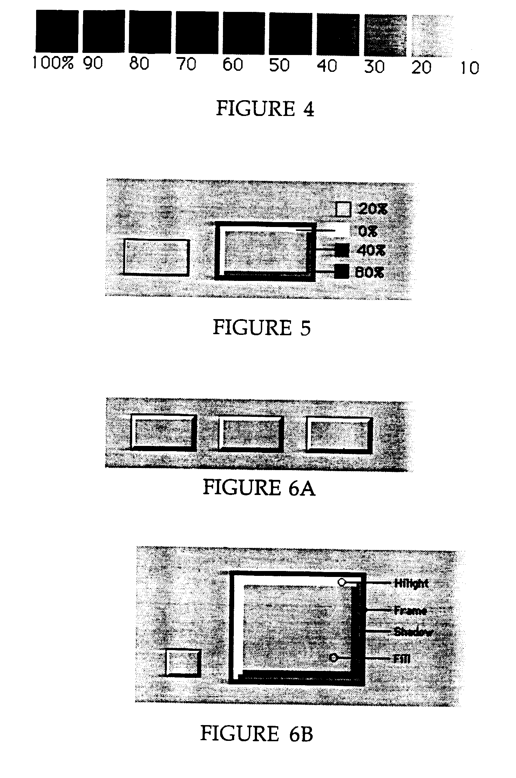

A process used in art and design creates tints of a color by adding white to a pure color. A range of gray values is created when increments of white are added to black. Each color tint is expressed as a tint of the original color. Figure 4 shows a range of ten percent black tints, which create a range of grays. Colors selected from this range of grays work well together to create 3D effects in accordance with a preferred embodiment. Figure 5 shows example graphic areas, drawn using the ten percent grays.

The examples in Figure 6A are created by assigning a light color ("highlight") to the edges which appear to catch and reflect light, a medium color ("fill") to the background, and one or two colors to areas of shaded contour ("light shadow" and "shadow"). In some cases, a very dark color ("frame") is used as a dark defining line. These colors are employed in different ways to achieve graphic elements of different appearances and effects. Figure 6B illustrates an added area for a frame. Using these four colors in different ways, many different styles of areas can be created. "Area" is used to depict a generic enclosed region. Visually, an area is defined by the darkest line. For a given graphic element, it is the contrast, the difference in color value (percent), between these colors that gives the effect and degree of depth. With less difference between the colors used for the hilight, fill, light shadow, shadow and frame, the area appears to be softer and shallower. With more contrast, the area appears sharper and higher. Figure 6A presents three objects, which differ only in the colors used for the frame and shadow areas, and the resulting optical effect of different levels of depth.

### Specifying Lighter and Darker Colors

To create the effect of contour using chromatic color, it is important to determine the corresponding lighter and darker colors for the highlight, shadows and frame. One way to describe color is in terms of hue, saturation and brightness (or value). *Hue* refers to the chromatic color (blue, green, etc.). *Saturation* is used to indicate color purity, compared with white. *Brightness,* also called *value,* indicates the achromatic intensity, or how much black is added to the color. Artists specify color as tints and shades of basic pigments. A *tint* is the result of adding white to the pigment, and has the same effect of decreasing saturation. Adding black to a pigment creates a *shade,* or decrease in brightness. The end results are different colors of the same hue, with varying saturation and brightness, creating the corresponding lighter and darker colors.

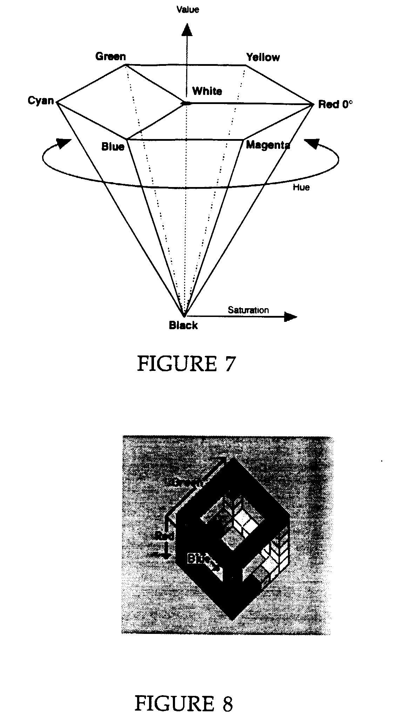

Color models are a convenient way to specify colors and their relationships to each other. A color model is a description of a 3D color coordinate system in which a specific color is represented by a point. Many different color models have been created by artists and scientists to explain different aspects of color. A Hue, Saturation, Value (HSV) color model represents an artist's intuitive use of color, tint and shade. Figure 7 illustrates a HSV color model which is based on a cylindrical coordinate system, a six sided pyramid (hex cone) with a flat top at one end, terminating in a point at the other end. The outer edges of the flat top of the hex cone contain the pure, brightest colors (red, blue, green) and their secondary colors. Hue is specified in degree around the diameter, with 0° and 360° being pure red. The center axis contains achromatic values with white at the top center, black at the pointed end, and gray values running in-between along the vertical axis. Saturation is specified by the radial distance from the center. Value is specified as the distance from the black pointed end. Within this color model, a lighter or darker color for a given hue can be found by increasing or decreasing value and saturation, which identifies a color above or below that hue.

### Determining lighter and darker colors in a computer system palette.

Foley, vanDam, et al, explain the intricacies of color in computer CRT displays in Interactive Computer Graphics: Principles and Practice, ((c) 1990 Addison-Wesley Publishing Company, Inc.). In their book they indicate, "The Red, Green, Blue (RGB) color model used in color CRT monitors and color raster graphics employs a Cartesian coordinate system. The RGB primaries are *additive* primaries; that is, the individual contributions of each primary are added together to yield the result.... The main diagonal of the cube, with equal amounts of each primary, represents the gray levels; black is 0,0,0; white is 1,1,1."

The red, green, and blue primary colors used in the additive color systems relate to the red, green and blue phosphors used in color displays, and to the psychological-physiological *tri-stimulus theory* of color perception, which is based on the hypothesis that there are three kinds of cones on the retina of the eye, each with peak sensitivities to light of these hues. Figure 8 shows the outside edges of a RGB cube.

To be compatible with eight bit CRT displays, commonly used in the computer industry, a preferred embodiment optimizes its color choices to identify exact colors available on this type of display. An eight bit color display is capable of showing two-hundred fifty-six colors. The RGB color space inside a two-hundred fifty-six color gamut is a cube of 6x6x6 units, or 216 colors (including black, white and four grays). Thus, the points in this cube are each different from their neighbors by 20% along one or more axis. (The remaining 40 slots available in the 256 color gamut are usually selected by the system designers.)

The RGB cube and the HSV hex cone are geometrically similar shapes. The top of the HSV hex cone corresponds to the projection seen by looking along the principal diagonal of the RGB color cube from white toward black. A preferred embodiment employs the technique of finding lighter and darker corresponding colors by translating a color specified in RGB space into the HSV color space. This process also maintains the integrity of the interface when viewed in greyscale because it relies on the contrast between the colors to maintain the illusion of depth. A detailed explanation of color, color space, color gamuts and other color related principles described and illustrated in this specification is presented in, Principles of Color Technology, 2nd Edition, by Fred W. Billmeyer, Jr. and Max Salzman, John Wiley & Sons, 1981; Color and the Computer, by Foley et al., Addison-Wesley Publishing Co., Inc. 1990.

### Defining Elements

A preferred embodiment for displaying elements employs 3D rendering technology. This processing includes defining each element as an individual object having depth, width and height, specifying the light source, and then rendering the output using a sophisticated 3D mechanism. An advantage of the preferred embodiment is that these programming methods can be specialized for the purpose of drawing software interface elements, such as windows, buttons, and other types of controls. Using this approach, elements can be created and displayed on the screen very rapidly with little processor impact because complex calculations and data transformations are minimized.

### Details in accordance with a preferred embodiment

A preferred embodiment includes a flexible method for automatically determining new colors for shading contour by manipulating the saturation and value of a base fill color. Four new colors are derived from the fill color - hilight, light shadow, shadow and frame. These five colors are twenty percent darker or lighter in value. (On a scale where black is 100%)

The process is:
1. Specify a starting base or "fill" color, as coordinates in RGB (red, green, blue) color model.
2. Convert the fill color to the HSV (hue, saturation, value) color model. (A description of the RGB and HSV color models and the algorithm to convert between the two is published in *Interactive Computer Graphics: Principles and Practice,* Foley, vanDam, et al, (c) 1990 Addison-Wesley Publishing Company, Inc.)
3. Determine new HSV values for the four new colors:
   a. To determine the "highlight" color, the fill color's saturation is multiplied by 0.8, and the value is multiplied by 1.25, with a maximum value of 1.
   b. To determine the "light shadow" color, the fill color's saturation is multiplied by 1.32, and the value is multiplied by .75, with a maximum value of 1.
   c. To determine the "shadow" color, the fill color's saturation is multiplied by 2 with a maximum value of 1. The value is divided by 2.
   d. To determine the "frame" color, the fill color's saturation is multiplied by four, with a maximum value of 1, and the value is divided by four.
   4. Convert the HSV values for each color back to RGB.
   5. Assign these colors to the lines or areas which draw a particular element.

### Detailed Logic

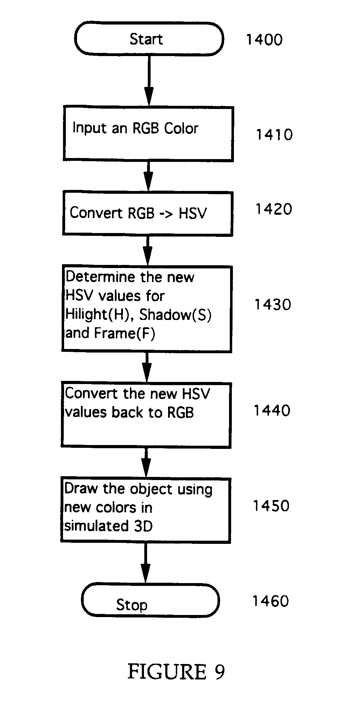

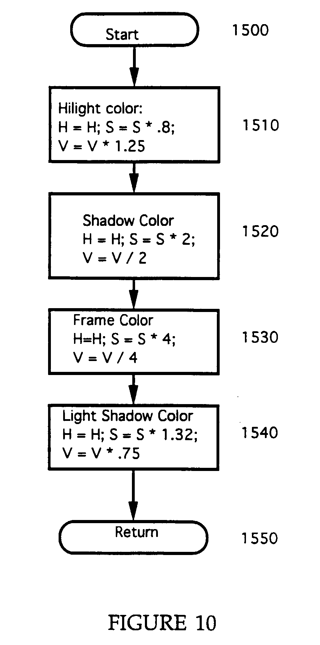

The logic associated with a preferred embodiment is also presented in the flowchart shown in Figure 9. Processing commences at terminal 1400 where control is passed to function block 1400 where the Red, Green. Blue (RGB) color is obtained. Then, at function block 1420, the RGB color is converted to Hue, Saturation and Value as described above. The new HSV values are obtained at 1430 for Highlight (H), Shadow (S) and Frame(F). The details of this calculation are presented in Figure 10 and its accompanying description. Then the new HSV values are converted back to RGB values as indicated in function block 1440, the object is drawn in simulated 3D in function block 1450, and processing is completed at terminal 1460.

Figure 10 is a flowchart of the detailed logic associated with obtaining new values for the Highlight Color, Shadow Color, Frame Color and the Light Shadow Color. Processing commences at terminal 1500 and control is immediately passed to function block 1510 to calculate the Highlight color. To determine the Highlight color: H = H; S = S * .8; and V = V * 1.25 (Vmax=1). Then, at function block 1520 the Shadow Color is calculated, at function block 1530, the Frame Color is calculated To determine the shadow color: H = H; S = S * 2 (max=1); V = V / 2. To determine the frame color: H = H; S = S * 4 (max=1); and V = V / 4. At function block 1540 the Light Shadow Color is calculated. To determine the light shadow color: H = H; S = S * 1.32; and V = V * .75. These values are used to carry out the processing set forth in Figure 14 at function block 1450. Objects such as bounding rectangles, buttons and fields using these as line colors. By positioning lines of certain colors next to each other, a 3D effect is achieved. The overall color of the object can be changed by passing the desired fill color. The rest of the colors change automatically as indicated in the flowchart logic. Finally, processing is completed at terminal 1550.

Similar uses of the rendering system are available for bounding rectangles and other fields.

## Claims

1. A method for processing graphic objects on a computer with a memory and an attached display with the aid of an object-oriented operating system, comprising the steps of:
(a) receiving a base fill color and a shape defining a graphic object to be displayed (1410);
(b) calculating a shadow color based on the base fill color (1520);
(c) calculating a highlight color based on the the base fill color (1510); and
(d) displaying the object on the attached display with the base fill color, the shadow color and the highlight color (1450) such that the graphic object is given a three-dimensional appearance.

2. A method as recited in claim 1, including the step of calculating a frame color (1530) based on the base fill color and displaying a frame around the object on the display.

3. A method as recited in claim 1, including the step of calculating a frame color as a function of a hue, saturation and value.

4. A method as recited in claim 1, including the step of calculating the highlight color as a function of a hue, saturation and value.

5. A method as recited in claim 1, including the step of calculating the shadow color as a function of a hue, saturation and value.

6. A method as recited in claim 1, including the step of filling an object based on the base fill color.

7. A method as recited in claim 4, wherein the highlight color is composed of 100% of the hue, 80% of the saturation and 125% of the value.

8. A method as recited in claim 5, wherein the shadow color is composed of 100% of the hue, 200% of the saturation and 50% of the value.

9. A method as recited in claim 3, wherein the frame color is composed of 100% of the hue, 400% of the saturation and 25% of the value.

10. A method as recited in claim 1, including the step of calculating a light shadow color (1540) based on the base fill color and displaying the object on the attached display with the base fill color, the shadow color, the light shadow color and the highlight color.

11. A method as recited in claim 10, including the step of calculating the light shadow color as a function of a hue, saturation and value.

12. A method as recited in claim 11, wherein the light shadow color is composed of 100% of the hue, 132% of the saturation and 75% of the value.

13. A method as recited in claim 1, including the step of displaying a fill area with a shadow perimeter along at least two sides of the fill area, a highlight perimeter, and a frame perimeter outside the shadow perimeter and the highlight perimeter.

14. A system for processing graphic objects on a computer, including a processor, a memory and an attached display, with the aid of an object-oriented operating system, comprising:
(a) means (1410) for receiving a base fill color and a shape defining a graphic object to be displayed;
(b) means (1520) for calculating a shadow color based on the base fill color;
(c) means (1510) for calculating a highlight color based on the the base fill color; and
(d) means (1450) for displaying the object on the attached display with the base fill color, the shadow color and the highlight color such that the graphic object is given a three-dimensional appearance.

15. A system as recited in claim 14 including means (1530) for calculating a frame color based on the base fill color and displaying a frame around the object on the display.

16. A system as recited in claim 14, including means for calculating a frame color as a function of a hue, saturation and value.

17. A system as recited in claim 14, including means for calculating a highlight color as a function of a hue, saturation and value.

18. A system as recited in claim 14, including means for calculating a shadow color as a function of a hue, saturation and value.

19. A system as recited in claim 14, including means for filling an object based on the base fill color.

20. A system as recited in claim 17, wherein the highlight color is composed of 100% of the hue, 80% of the saturation and 125% of the value.

21. A system as recited in claim 18, wherein the shadow color is composed of 100% of the hue, 200% of the saturation and 50% of the value.

22. A system as recited in claim 16, wherein the frame color is composed of 100% of the hue, 400% of the saturation and 25% of the value.

23. A system as recited in claim 14, including means (1540) for calculating a light shadow color based on the base fill color and means for displaying the object on the attached display with the base fill color, the shadow color, the light shadow color and the highlight color.

24. A system as recited in claim 23, including means for calculating a light shadow color as a function of a hue, saturation and value.

25. A system as recited in claim 24, wherein the light shadow color is composed of 100% of the hue, 132% of the saturation and 75% of the value.

26. A system as recited in claim 14, including means for displaying a fill area with a shadow perimeter along at least two sides of the fill area, a highlight perimeter, and a frame perimeter outside the shadow perimeter and the highlight perimeter.

## Patentansprüche

1. Ein Verfahren zur Verarbeitung graphischer Objekte in einem Computer mit einem Speicher und einer angeschlossenen Anzeigevorrichtung mit Hilfe eines objektorientierten Betriebssystems, umfassend die Schritte:
(a) Empfangen einer Grundfüllfarbe und einer Form, die ein anzuzeigendes Objekt definieren (1410);
(b) Berechnen einer Schattenfarbe auf der Basis der Grundfüllfarbe (1520);
(c) Berechnen einer Hervorhebungsfarbe auf der Basis der Grundfüllfarbe (1510); und
(d) Anzeigen des Objekts auf der angeschlossenen Anzeigevorrichtung mit der Grundfüllfarbe, der Schattenfarbe und der Hervorhebungsfarbe (1450), so daß dem graphischen Objekt ein dreidimensionales Aussehen gegeben wird.

2. Ein Verfahren nach Anspruch 1, enthaltend den Schritt der Berechnung einer Rahmenfarbe (1530) auf der Basis der Grundfüllfarbe und Anzeigen eines Rahmens um das Objekt auf der Anzeigevorrichtung.

3. Ein Verfahren nach Anspruch 1, enthaltend den Schritt der Berechnung einer Rahmenfarbe als eine Funktion von Farbton, Sättigung und Wert.

4. Ein Verfahren nach Anspruch 1, enthaltend den Schritt der Berechnung einer Hervorhebungsfarbe als Funktion von Farbton, Sättigung und Wert.

5. Ein Verfahren nach Anspruch 1, enthaltend den Schritt der Berechnung einer Schattenfarbe als Funktion von Farbton, Sättigung und Wert.

6. Ein Verfahren nach Anspruch 1, enthaltend den Schritt der Füllung eines Objekts auf der Basis der Grundfüllfarbe.

7. Ein Verfahren nach Anspruch 4, worin sich die Hervorhebungsfarbe aus 100% des Farbtones, 80% der Sättigung und 125% des Wertes zusammensetzt.

8. Ein Verfahren nach Anspruch 5, worin sich die Schattenfarbe aus 100% des Farbtones, 200% der Sättigung und 50% des Wertes zusammensetzt.

9. Ein Verfahren nach Anspruch 3, worin sich die Rahmenfarbe aus 100% des Farbtones, 400% der Sättigung und 25% des Wertes zusammensetzt.

10. Ein Verfahren nach Anspruch 1, enthaltend den Schritt der Berechnung einer Halbschattenfarbe (1540) auf der Basis der Grundfüllfarbe und Anzeigen des Objekts auf der angeschlossenen Anzeigevorrichtung mit der Grundfüllfarbe, der Schattenfarbe, der Halbschattenfarbe und der Hervorhebungsfarbe.

11. Ein Verfahren nach Anspruch 10, enthaltend den Schritt der Berechnung der Halbschattenfarbe als Funktion von Farbton, Sättigung und Wert.

12. Ein Verfahren nach Anspruch 11, worin sich die Halbschattenfarbe aus 100% des Farbtones, 132% der Sättigung und 75% des Wertes zusammensetzt.

13. Ein Verfahren nach Anspruch 1, enthaltend den Schritt der Anzeige eines Füllbereichs mit einer Schattenperipherie auf wenigstens zwei Seiten des Füllbereichs, einer Hervorhebungsperipherie und einer Rahmenperipherie außerhalb der Schattenperipherie und der Hervorhebungsperipherie.

14. Ein System zur Verarbeitung graphischer Objekte in einem Computer mit einem Speicher und einer angeschlossenen Anzeigevorrichtung mit Hilfe eines objektorientierten Betriebssystems, enthaltend:
(d) Mittel (1410) zum Empfangen einer Grundfüllfarbe und einer Form, die ein anzuzeigendes graphisches Objekt definieren;
(b) Mittel (1520) zum Berechnen einer Schattenfarbe auf der Basis der Grundfüllfarbe;
(c) Mittel (1510) zum Berechnen einer Hervorhebungsfarbe auf der Basis der Grundfüllfarbe; und
(d) Mittel (1450) zum Anzeigen des Objekts auf der angeschlossenen Anzeigevorrichtung mit der Grundfüllfarbe, der Schattenfarbe und der Hervorhebungsfarbe (1450), so daß dem graphischen Objekt ein dreidimensionales Aussehen gegeben wird.

15. Ein System nach Anspruch 14, enthaltend Mittel (1530) zum Berechnen einer Rahmenfarbe auf der Basis der Grundfüllfarbe und Anzeigen eines Rahmens um das Objekt auf der Anzeigevorrichtung.

16. Ein System nach Anspruch 14, enthaltend Mittel zum Berechnen einer Rahmenfarbe als eine Funktion von Farbton, Sättigung und Wert.

17. Ein System nach Anspruch 14, enthaltend Mittel zum Berechnen einer Hervorhebungsfarbe als Funktion von Farbton, Sättigung und Wert.

18. Ein System nach Anspruch 14, enthaltend Mittel zum Berechnen einer Schattenfarbe als Funktion von Farbton, Sättigung und Wert.

19. Ein System nach Anspruch 14, enthaltend Mittel zum Füllen eines Objekts auf der Basis der Grundfüllfarbe.

20. Ein System nach Anspruch 17, worin sich die Hervorhebungsfarbe aus 100% des Farbtones, 80% der Sättigung und 125% des Wertes zusammensetzt.

21. Ein System nach Anspruch 18, worin sich die Schattenfarbe aus 100% des Farbtones, 200% der Sättigung und 50% des Wertes zusammensetzt.

22. Ein System nach Anspruch 16, worin sich die Rahmenfarbe aus 100% des Farbtones, 400% der Sättigung und 25% des Wertes zusammensetzt.

23. Ein System nach Anspruch 14, enthaltend Mittel (1540) zum Berechnen einer Halbschattenfarbe auf der Basis der Grundfüllfarbe und Mittel zum Anzeigen des Objekts auf der angeschlossenen Anzeigevorrichtung mit der Grundfüllfarbe, der Schattenfarbe, der Halbschattenfarbe und der Hervorhebungsfarbe.

24. Ein System nach Anspruch 23, enthaltend Mittel zum Berechnen einer Halbschattenfarbe als Funktion von Farbton, Sättigung und Wert.

25. Ein System nach Anspruch 24, worin sich die Halbschattenfarbe aus 100% des Farbtones, 132% der Sättigung und 75% des Wertes zusammensetzt.

26. Ein System nach Anspruch 14, enthaltend Mittel zum Anzeigen eines Füllbereichs mit einer Schattenperipherie auf wenigstens zwei Seiten des Füllbereichs, einer Hervorhebungsperipherie und einer Rahmenperipherie außerhalb der Schattenperipherie und der Hervorhebungsperipherie.

## Revendications

1. Méthode pour traiter des objets graphiques sur un ordinateur avec une mémoire et un affichage connecté à l'aide d'un système d'exploitation orienté objet, comprenant les étapes de :
a) recevoir une couleur de remplissage de base et une forme définissant un objet graphique à afficher (1410),
b) calculer une couleur d'ombre basée sur la couleur de remplissage de base (1520),
c) calculer une couleur de surbrillance basée sur la couleur de remplissage de base (1510), et
d) afficher l'objet sur l'affichage connecté avec la couleur de remplissage de base, la couleur d'ombre et la couleur de surbrillance (1450) de telle sorte que l'objet graphique ait une apparence tridimensionnelle.

2. Méthode telle que définie dans la revendication 1, comprenant l'étape de calculer une couleur de cadre (1530) basée sur la couleur de remplissage de base et afficher un cadre autour de l'objet sur l'affichage.

3. Méthode telle que définie dans la revendication 1, comprenant l'étape de calculer une couleur de cadre comme une fonction des paramètres de teinte, saturation et valeur.

4. Méthode telle que définie dans la revendication 1, comprenant l'étape de calculer la couleur de surbrillance comme une fonction des paramètres de teinte, saturation et valeur.

5. Méthode telle que définie dans la revendication 1, comprenant l'étape de calculer la couleur d'ombre comme une fonction des paramètres de teinte, saturation et valeur.

6. Méthode telle que définie dans la revendication 1, comprenant l'étape de remplir un objet basé sur la couleur de remplissage de base.

7. Méthode telle que définie dans la revendication 4, dans laquelle la couleur de surbrillance est composée de 100% de la teinte, 80% de la saturation et 125% de la valeur.

8. Méthode telle que définie dans la revendication 5, dans laquelle la couleur d'ombre est composée de 100% de la teinte, 200% de la saturation et 50% de la valeur.

9. Méthode telle que définie dans la revendication 3, dans laquelle la couleur de cadre est composée de 100% de la teinte, 400% de la saturation et 25% de la valeur.

10. Méthode telle que définie dans la revendication 1, comprenant l'étape de calculer une couleur d'ombre éclairée (1540) basée sur la couleur de remplissage de base et afficher l'objet sur l'affichage connecté avec la couleur de remplissage de base, la couleur d'ombre, la couleur d'ombre éclairée et la couleur de surbrillance.

11. Méthode telle que définie dans la revendication 10, comprenant l'étape de calculer la couleur d'ombre éclairée comme une fonction des paramètres de teinte, saturation et valeur.

12. Méthode telle que définie dans la revendication 11, dans laquelle la couleur d'ombre éclairée est composée de 100% de la teinte, 132% de la saturation et 75% de la valeur.

13. Méthode telle que définie dans la revendication 1, comprenant l'étape d'afficher une zone de remplissage avec un périmètre d'ombre le long d'au moins deux côtés de la zone de remplissage, un périmètre de surbrillance, et un périmètre de cadre à l'extérieur du périmètre d'ombre et du périmètre de surbrillance.

14. Système pour traiter des objets graphiques sur un ordinateur avec une mémoire et un affichage connecté à l'aide d'un système d'exploitation orienté objet, comprenant :
a) des moyens (1410) pour recevoir une couleur de remplissage de base et une forme définissant un objet graphique à afficher,
b) des moyens (1520) pour calculer une couleur d'ombre basée sur la couleur de remplissage de base,
c) des moyens (1510) pour calculer une couleur de surbrillance basée sur la couleur de remplissage de base, et
d) des moyens (1450) pour afficher l'objet sur l'affichage connecté avec la couleur de remplissage de base, la couleur d'ombre et la couleur de surbrillance de telle sorte que l'objet graphique ait une apparence tridimensionnelle.

15. Système tel que défini dans la revendication 14, comprenant des moyens (1530) pour calculer une couleur de cadre basée sur la couleur de remplissage de base et afficher un cadre autour de l'objet sur l'affichage.

16. Système tel que défini dans la revendication 14, comprenant des moyens pour calculer une couleur de cadre comme une fonction des paramètres de teinte, saturation et valeur.

17. Système tel que défini dans la revendication 14, comprenant des moyens pour calculer la couleur de surbrillance comme une fonction des paramètres de teinte, saturation et valeur.

18. Système tel que défini dans la revendication 14, comprenant des moyens pour calculer la couleur d'ombre comme une fonction des paramètres de teinte, saturation et valeur.

19. Système tel que défini dans la revendication 14, comprenant des moyens pour remplir un objet basé sur la couleur de remplissage de base.

20. Système tel que défini dans la revendication 17, dans lequel la couleur de surbrillance est composée de 100% de la teinte, 80% de la saturation et 125% de la valeur.

21. Système tel que défini dans la revendication 18, dans lequel la couleur d'ombre est composée de 100% de la teinte, 200% de la saturation et 50% de la valeur.

22. Système tel que défini dans la revendication 16, dans lequel la couleur de cadre est composée de 100% de la teinte, 400% de la saturation et 25% de la valeur.

23. Système tel que défini dans la revendication 14,, comprenant des moyens (1540) pour calculer une couleur d'ombre éclairée basée sur la couleur de remplissage de base et des moyens pour afficher l'objet sur l'affichage connecté avec la couleur de remplissage de base, la couleur d'ombre, la couleur d'ombre éclairée et la couleur de surbrillance.

24. Système tel que défini dans la revendication 23, comprenant des moyens pour calculer la couleur d'ombre éclairée comme une fonction des paramètres de teinte, saturation et valeur.

25. Système tel que défini dans la revendication 24, dans lequel la couleur d'ombre éclairée est composée de 100% de la teinte, 132% de la saturation et 75% de la valeur.

26. Système tel que défini dans la revendication 14, comprenant des moyens pour afficher une zone de remplissage avec un périmètre d'ombre le long d'au moins deux côtés de la zone de remplissage, un périmètre de surbrillance, et un périmètre de cadre à l'extérieur du périmètre d'ombre et du périmètre de surbrillance.
